# EUROPEAN PATENT SPECIFICATION

(11) **EP 0 551 823 B1**
(45) Date of publication and mention of the grant of the patent: **19.08.1998**
(21) Application number: 93100091.3
(22) Date of filing: 05.01.1993
(51) Int. Cl.: G03G 15/00

(54) **Image processing apparatus**
Bilderzeugungsgerät
Appareil pour le traitement d'image

(30) Priority: 14.01.1992 JP 5032/92
(43) Date of publication of application: 21.07.1993
(73) Proprietor: SHARP KABUSHIKI KAISHA, Osaka-shi Osaka 545 (JP)
(72) Inventor: Hashimoto, Osamu, Ikoma-shi, Nara-ken (JP); Tajima, Motokichi, Kawaguchi-shi, Saitama-ken (JP)
(74) Representative: Müller, Frithjof E., Dipl.-Ing.

(56) References cited:
- EP-A- 0 263 398
- EP-A- 0 301 488
- DE-A- 3 112 006
- GB-A- 2 220 815
- US-A- 4 839 740
- PATENT ABSTRACTS OF JAPAN, unexamined applications, E section, vol. 14, no. 166, March 30, 1990 THE PATENT OFFICE JAPANESE GOVERNMENT page 111 E 911; & JP-A-2 22 944 (MINOLTA)

## Description

### BACKGROUND OF THE INVENTION

### 1. Field of the Invention

The present invention relates to an image processing apparatus such as a digital copying machine.

### 2. Description of the Prior Art

In an image processing apparatus such as a digital copying machine as well as in a commonly available copying machine, a transfer paper is fed from a transfer paper cassette for holding the transfer papers in synchronous to the reading so that a copied image may be formed when reading a document. Such an image processing apparatus is disclosed in US-A-4 839 740, for example. This operation holds true to not only a case where an image on just one surface of a document to be copied is copied on just one surface of a transfer paper, that is, copying of an image from one side to one side but also a case of copying an image from one side to both of the sides and a case of copying an image from both sides to both sides. This operation is arranged to feed a transfer paper from the transfer paper cassette in synchronous to reading a document to be copied for forming a copied image.

In the above-mentioned image processing apparatus the operation of reading a document to be copied is synchronous to an operation of forming a copied image. The disadvantage of the above-mentioned image processing apparatus is appeared that after terminating the image formation on one side of a transfer paper, a problem may take place where a transfer paper is left inside of the image processing apparatus in case that it is not enabling to read the image data to be formed on the other side of the transfer paper or the reading is stopped. In this case, an operator has to deal with the transfer paper left in the apparatus.

### SUMMARY OF THE INVENTION

It is therefore an object of the present invention to provide an image processing apparatus which is arranged to improve an operating efficiency when transferring an image on both sides of a transfer paper.

The object of the present invention can be achieved by an image processing apparatus for optically reading a document and forming read image data on both sides of one transfer paper includes a unit for determining whether or not all sequences to be preprocessed for transferring the image data on both sides of a transfer paper are completed, and a unit for starting a feeding of a transfer paper in case that it is determined all sequences are completed by the determining unit.

Preferably, the image processing apparatus further comprises an operation unit which includes a plurality of function keys.

More preferably, the operation unit includes a both-sides copying key and a copy-starting key, and the determining unit is so arranged that a function of performing both-sides copying is started by selecting the both-sides copying key followed by pressing the copy-starting key.

The image processing apparatus further includes a document platform for placing a document thereon and a document feeding unit for feeding a document therefrom, and the determining unit is so arranged that a document containing image data to be transferred on a side of a transfer paper is placed on the document platform by using the document feeding unit, preferably.

The image processing apparatus further includes a scanning unit which scans a document in a manner to read the image data of the document, and the determining unit is adapted to determine whether or not the image data is read by the scanning unit, preferably.

The image processing apparatus is so arranged that when the image data is not properly read by the scanning unit, a document containing image data to be transferred on a side of a transfer paper is placed on the document platform by using the document feeding unit so as to repeat a scanning by the scanning unit.

The image processing apparatus is so arranged that when the determining unit determines that the image data is read by the scanning unit properly, then a document containing image data to be transferred onto other side of the transfer paper is placed on the document platform by using the document feeding unit.

The document feeding unit is adapted to select any one of copying processes which include one-side to both-sides copying and both-sides to both-sides copying.

The document feeding unit is so arranged that when the one-side to both-sides copying is selected, a different succeeding document is placed on the document platform, and when the both-sides to both-sides copying is selected, the document is reversed and placed on the document platform.

The scanning unit scans the different document for reading image data on the different document when the one-side to both-sides copying is selected, and the scanning unit scans the reversed document for reading image data on the reversed document when the both-sides to both-sides copying is selected. The scanning unit includes an image memory having a capacity corresponding to both sides of the transfert paper.

The determining unit determines whether or not the image data is read by the scanning unit, and when the image data is not properly read by the scanning unit, a document containing image data to be transferred onto other side of the transfer paper is placed on the document platform by using the document feeding unit so as to repeat a scanning by the scanning unit.

The image processing apparatus further includes an indication unit for indicating a termination of the documents.

The indication unit is so arranged that a printing of one side of a document is performed by the indication unit in case of reading out the documents one by one in a manual operation when a total number of the documents is an odd number.

The indication unit is preferably one of the plurality of function keys disposed in the operation unit.

In operation, the unit for determining whether or not all sequences to be preprocessed for transferring the image data on both sides of one transfer paper are completed operates to determine whether or not the preparation for feeding a transfer paper is terminated. Concretely, among all sequences to be preprocessed, for example, if jamming takes place on the way of feeding a transfer paper in an automatic document feeder (ADF), it is determined that all the sequences are not terminated. If such a determination is given when forming image data on both sides of one transfer paper, the means for starting feeding a transfer paper is made inoperative so that no paper may be fed. When all the sequences to be preprocessed are terminated, the unit for starting feeding a transfer paper starts to operate.

Consequently, after all sequences to be preprocessed for transferring the image data for both sides of the transfer paper are completed, the transfer paper is fed for forming the image data. By this operation, in some unfavorable conditions such as if jamming takes place in the ADF, no transfer paper is left inside of the image processing apparatus, resulting in improving the working efficiency.

Further objects and advantages of the present invention will be apparent from the following description of the preferred embodiments of the invention as illustrated in the accompanying drawings.

### BRIEF DESCRIPTION OF THE DRAWINGS

Fig. 1 is a flowchart showing an operation of both-sides data transfer performed in a first embodiment of a digital copying machine according to the invention;
Fig. 2 is a time chart schematically showing an operation of both-sides data transfer done in a digital copying machine according to the invention;
Fig. 3 is a plane view showing an example of an operation panel included in the digital copying machine according to the invention;
Fig. 4 shows an example of a plus-function selecting screen appearing on the display of the operation panel according to the first embodiment of the present invention;
Fig. 5 is a sectional view schematically showing an arrangement of a digital copying machine according to the invention;
Fig. 6 composed of Fig. 6(i) and Fig. 6(ii) is a block diagram schematically showing an arrangement of an image processing section included in the digital copying machine according to the invention.
Fig. 7 is a flowchart showing an operation of both-sides data transfer performed in a second embodiment of a digital copying machine according to the invention; and
Fig. 8 shows another example of a plus-function selecting screen appearing on the display of the operation panel according to the second embodiment of the present invention.

### DESCRIPTION OF THE PREFERRED EMBODIMENTS

Referring to the accompanying drawings, an embodiment of an image processing apparatus according to the present invention will be described in details.

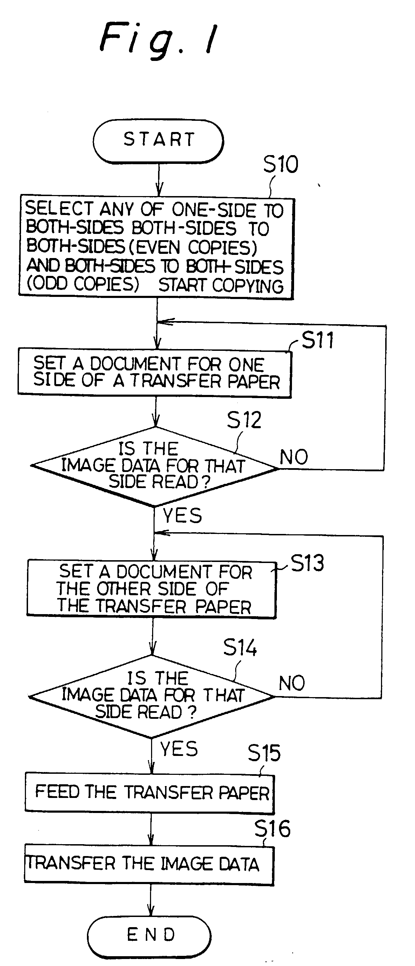

Fig. 1 shows a both-sides copying operation performed in a digital copying machine according to the first embodiment of the present invention.

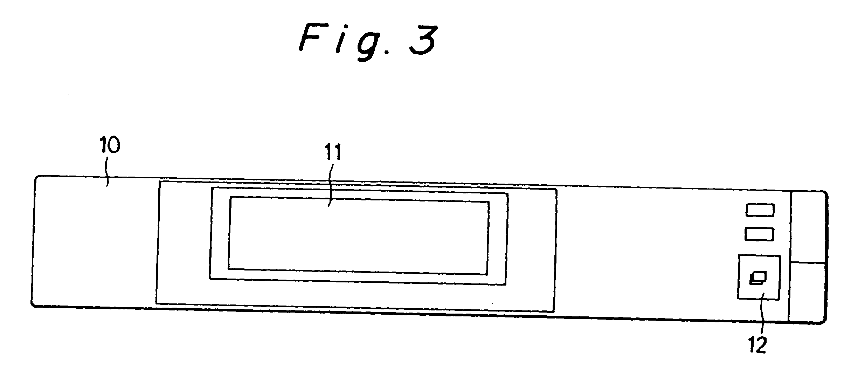

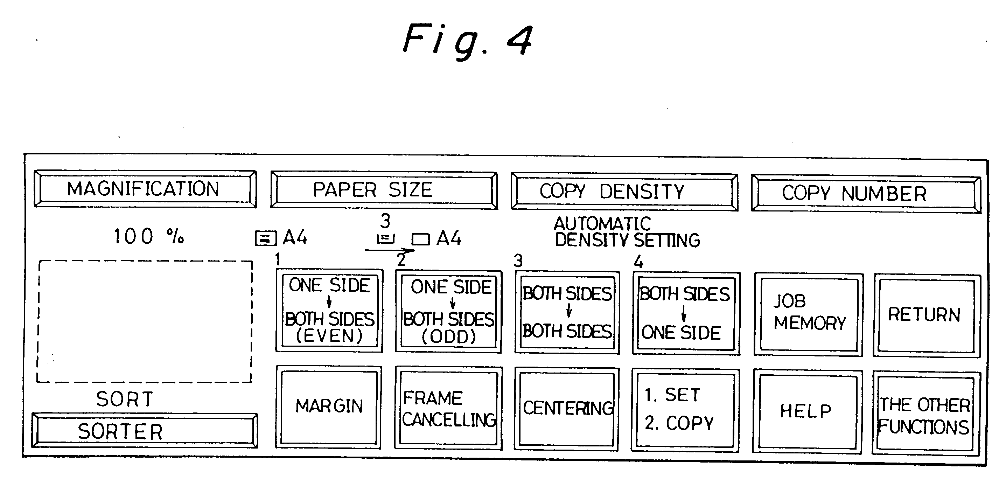

A "one-side to both-sides copying (even copies)" key, a "one-side to both-sides copying (odd copies)" key or a "both-sides to both-sides copying" key on the plus-function selecting screen (as shown in Fig. 4) appear on the display unit 11 of the operation panel 10 (as shown in Fig. 3).

The operation of performing both-sides copying is started by selecting the both-sides copying key (button) and then by pressing a copy-starting key (button) (step S10).

The document containing the image data to be transferred on a side of a transfer paper is placed on the document platform by an ADF (Automatic Document Feeder) (step S11).

The scanner unit scans in a manner to read the image data of the document and it is determined whether or not the image data is read by this scanning operation (step S12). If the image data is not properly read, for example, in case that the document is jammed in the ADF or the reading operation is stopped on the way, the operation returns to the step S11.

In case that the jamming takes place, an operator has to remove the document from the ADF and then press the copy-starting button for starting the copying operation again.

If the affirmative result is given at the step S12, the document containing the image data to be transferred onto the other side of the transfer paper is placed on the document platform (step S13).

In this case, the ADF may take two ways. One way is for the one-side to both-sides copying. In this way, a different succeeding document from that set at the step S11 is placed on the document platform.

The other way is for the both-sides to both-sides copying. In this way, the document set at the step S11 is reversed and placed on the document platform.

Next, the scanner unit scans the document for reading the image data on the document, and it is determined whether or not the image data is read by this scanning operation (step S14). If the data is not properly read, for example, in case that the document is jammed in the ADF, the operation returns to the step S13.

If the affirmative result is given at the step S12, a transfer paper is fed from the cassette holding the transfer papers (step S15).

The image data on both sides of the document is sequentially formed on the transfer paper (step S16). The means for determining whether or not all the sequences to be preprocessed for transferring the image data on both sides of the transfer paper are completed has functions corresponding to the steps S10 to S14, and the means for starting feeding a transfer paper has a function corresponding to the step S15.

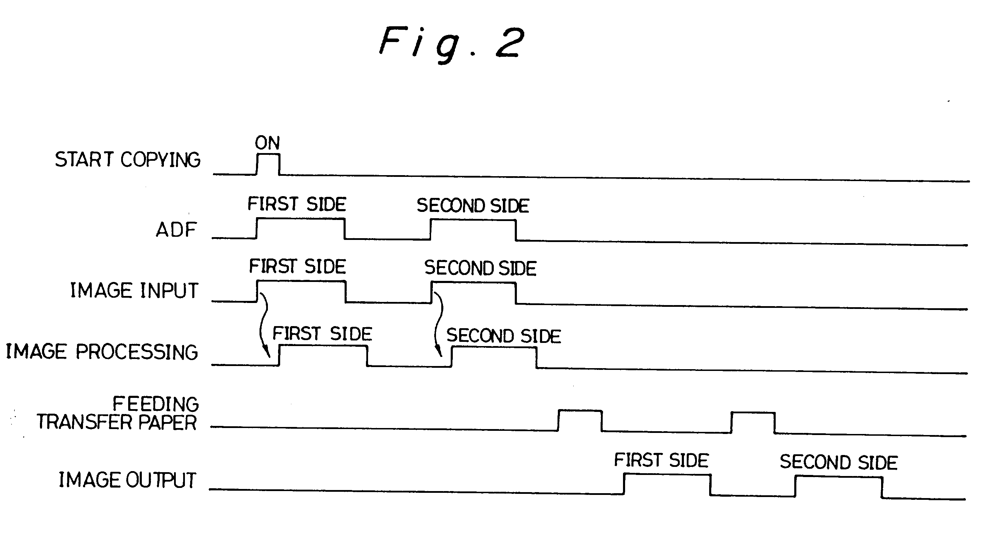

Next, the description will be made as referring to the time chart shown in Fig. 2.

When a copy-starting button is turned on, a high control signal is sent to the ADF so that the ADF may operates to feed the document onto the document platform. When the document is placed on the document platform, the image input is made high and the scanner unit scans the document for reading the image data on the document. The treatments such as digitizing are carried out with respect to the read image data while the remaining documents are in a scanning process.

A document containing an image data of a second leaf to be transferred on the other side of the transfer paper is fed from the ADF, and the image data is read and processed.

As described above, if an unfavorable conditions such as jamming is not taken place, and the image data on both sides is properly processed, then finally a transfer paper is fed so that the image data may be formed on the transfer paper. Then, the transfer paper is reversed and the image data on the other side is copied on the reversed side of the transfer paper. This completes a process of a both-sides transferring of one transfer paper.

As mentioned above, after all the sequences for transferring the image data on both sides of one transfer paper are completed. the transfer paper is fed for forming the image data, consequently, in an unfavorable state, such as when a jamming takes place in the ADF, no transfer paper is left inside of the image processing apparatus. This results in improving the working efficiency.

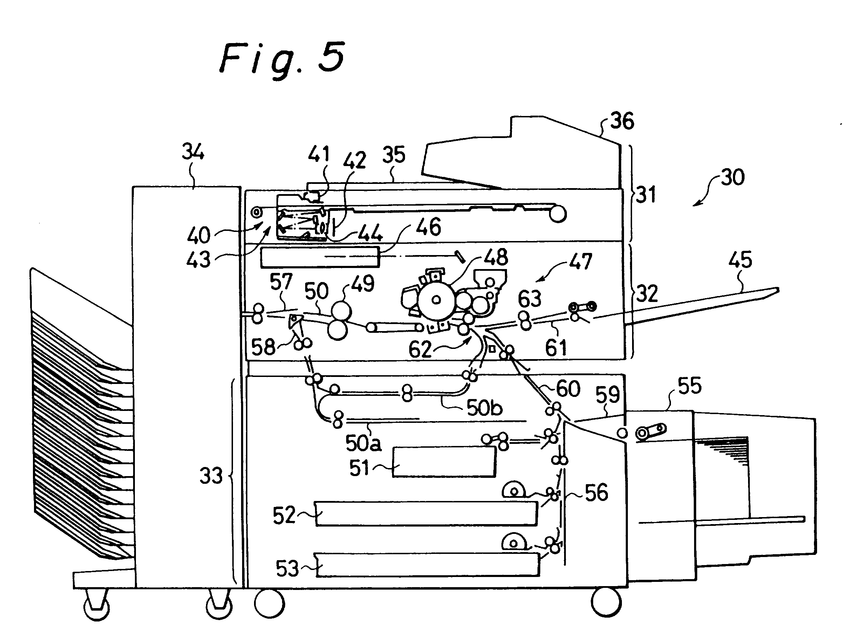

Fig. 5 shows an arrangement of the digital copying machine which is adapted to perform the both-sides copying process according to the flow chart shown in Fig. 1 as described above.

As shown in Fig. 5, the digital copying machine 30 includes a scanner section 31, a laser printer section 32, a multi-stage paper feeding unit 33 and a sorter 34.

The scanner section 31 is composed of a document platform 35 made of transparent glass, a both-sides ADF 36 and a scanner unit 40.

The multi-stage paper feeding unit 33 provides a first cassette 51, a second cassette 52, a third cassette 53, and a fourth cassette 55 to be selectively added. The multi-stage paper feeding unit 33 operates to feed a transfer paper in sequence from the top of the transfer papers accommodated in each stage cassette one by one and convey the transfer paper to the laser printer section 32. When a plurality of documents are set to the ADF 36 at one time, the ADF 36 operates to automatically feed the document one by one to the scanner unit 40. The scanner unit 40 reads one side or both sides of each document according to a selection made by an operator.

The scanner unit 40 is arranged to have a lamp reflector assembly 41 for exposing the document, a plurality of reflective mirrors 43 for guiding a reflective light image from the document to a charged coupled device (CCD) 42, and a lens 44 for forming a reflective light image from the document on the CCD 42. When scanning the document placed on the document platform 35, the scanner section 31 is arranged to read the image on the document as the scanner unit 40 is traveling along the lower surface of the document platform 35. When using the ADF 36, the scanner section 31 is arranged to convey the document in the state that the scanner unit 40 is stopped at a predetermined location under the ADF 36 and read the image on the document as it is conveyed.

The image data obtained by reading the image on the document through the effect of the scanner unit 40 is sent to the image processing section (not shown) to be described later and in which various treatments are carried out with respect to the image data. The resulting data is temporarily stored in a memory of the image processing section. Then, the image data is read from the memory to the laser printer section 32 according to an output indication so that an image may be formed on the transfer paper.

The laser printer section 32 provides a manual document tray 45, a laser writing unit 46 and an electronic photography processing section 47 for forming an image. The laser writing unit 46 provides a semiconductor laser for firing a laser beam according to the image data stored in the memory, a polygon mirror for deflecting the laser beam at an equal angular speed, and an f-θ lens for amending the laser beam deflected at an equally angular speed in a manner to allow the laser beam to be deflected on a photosensitive drum 48 of the electrostatic photography processing section 47 at an equally angular speed.

The electronic photography processing section 47 is arranged to have a charger, a developer, a transfer unit, a stripper, a cleaning unit, a discharger, and a fixer 49 around the photosensitive drum 48.

A conveying path 50 is further provided in the downstream side of the conveying direction of a transfer paper on which an image is to be formed by the fixer 49. The conveying path 50 is branched into a conveying path 57 connected to the sorter 34 and the multi-stage paper feeding unit 33. The conveying path 58 is branched at the multi-stage paper feeding unit 33. As the branched conveying path, a reversing conveying path 50a and both sides/synthesizing conveying path 50b are provided. At a both sides copying mode at which both sides of a document are copied, the reversing conveying path 50a serves to reverse the transfer paper. The both sides/synthesizing conveying path 50b serves to convey the transfer paper from the reversing conveying path 50a to the image-forming location of the photosensitive drum 48 at the both sides copying mode or convey the transfer paper to the image-forming location of the photosensitive drum 48 without reversing the paper at a one-side synthesizing copying mode at which images on different documents are copied on both sides of one transfer paper or the images on both sides of the transfer paper are respectively formed by the different color toners.

The multi-stage paper feeding unit 33 includes a common conveying path 56 which is arranged to convey the transfer papers out of the first cassette 51, the second cassette 52, and the third cassette 53 to the electronic photography processing unit 47. The common conveying path 56 is combined to a conveying path 59 led from the fourth cassette 55 on the way to the electronic photography processing unit 47 and then to a conveying path 60. The conveying path 60 is combined to a conveying path 61 led from the both sides/synthesizing conveying path 50b and the manual document tray 45 at a combined point 62 and is led up to an image forming location between the photosensitive drum 48 and the transfer unit of the electrostatic photography processing unit 47. The combined point 62 among these three conveying paths is located close to the image forming location.

Hence, in the laser writing unit 46 and the electronic photography processing unit 47, the image data read out of the memory is formed as an electrostatic latent image on the surface of the photosensitive drum 48 by operating the laser writing unit 46 to scan a laser beam on the surface of the drum 48. A toner image visualized by toner is electrostatically transferred on the transfer paper fed from the multi-stage paper feeding unit 33 and is fixed thereon. The image-formed transfer paper is conveyed to the sorter 34 through the fixer 49 and the conveying paths 50 and 57 or to the reversing conveying path 50a through the conveying paths 50 and 58.

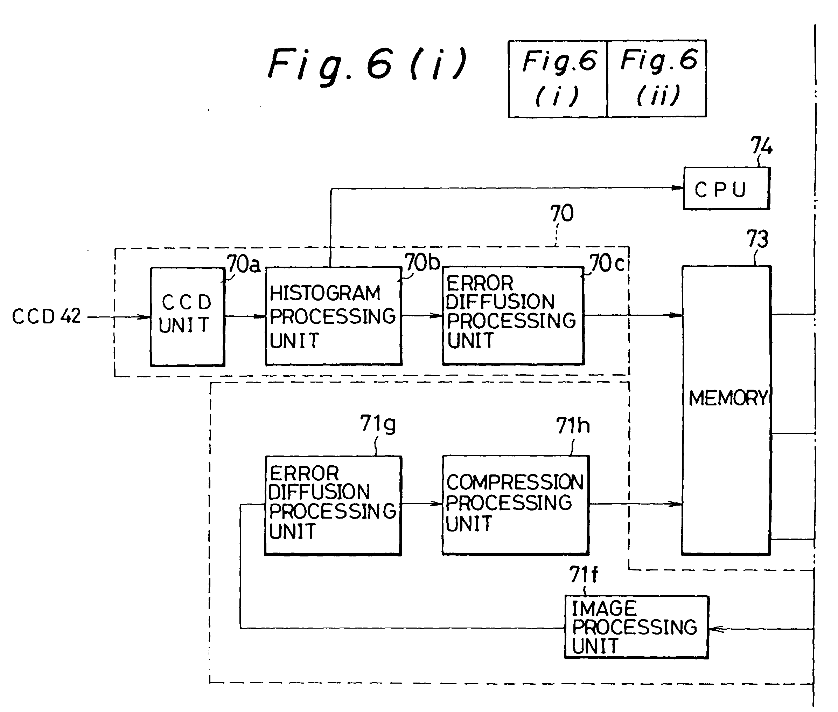

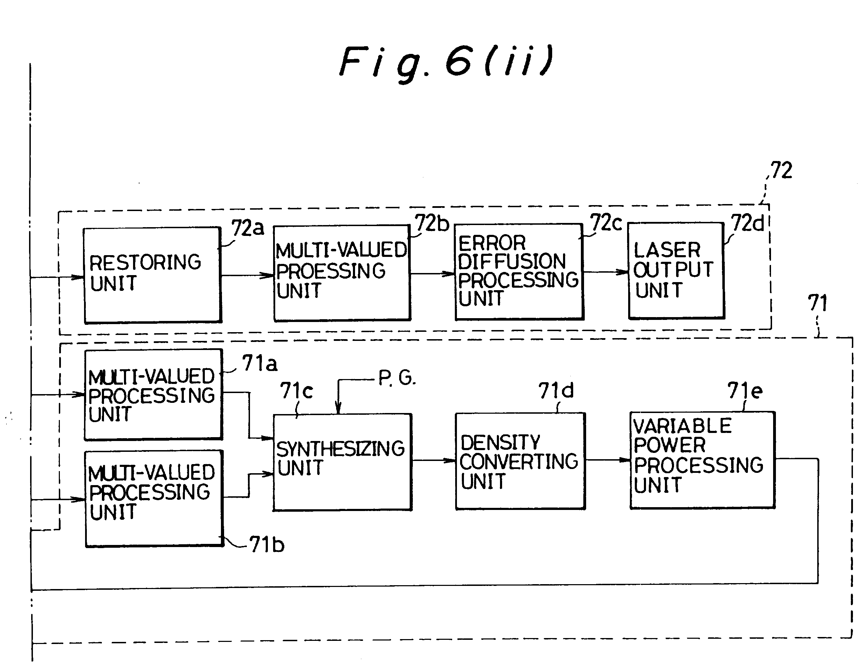

Fig. 6 composed of Fig. 6 (i) and Fig. 6 (ii) shows an arrangement of an image processing section included in the digital copying machine of Fig. 5.

As shown in Fig. 6, the image processing section of the digital copying machine 30 includes an image data input unit 70, an image processing unit 71, an image data output unit 72, a memory 73 such as a random access memory (RAM), and a central processing unit (CPU) 74.

The image data input unit 70 contains a charge-coupling device (CCD) unit 70a, a histogram processing unit 70b and an error diffusion processing unit 70c.

The image data input unit 70 converts the image data of the document read from the CCD 42 shown in Fig. 5 into a binary data and processes the image data through the effect of the error diffusion method as taking a histogram of the image as a binary digital amount. The processed image data is temporarily stored in the memory 73, that is, the CCD unit 70a converts the analog electric signal matching to each pixel density of the image data into a digital signal and then performs the Modulation Transfer Function (MTF) correction, a monochrome correction or a gamma correction with respect to the digital signal. The resulting 256-tone (8-bit) digital signal is output to the histogram processing unit 70b.

The histogram processing unit 70b provides a density data (histogram data) formed by adding the digital signals for 256-tone pixel densities to one another. If necessary, the resulting histogram data is sent to the CPU 74 or to the error diffusion processing unit 70c as pixel data.

In the error diffusion processing unit 70c, through the effect of an error diffusion method, one kind of a pseudo halftone processing, that is, a method where a binary error is reflected on the binary determination of an adjacent pixel, the 8-bit/pixel digital signal output from the CCD unit 70a is converted into one bit (binary value) and the redistributing operation is carried out for representing a local area density on the document with fidelity.

The image processing unit 71 includes multi-valued processing units 71a and 71b, a synthesizing unit 71c, a density converting unit 71d, a variable power processing unit 71e, an image processing unit 71f, an error diffusion processing unit 71g, and a compression processing unit 71h.

The image processing unit 71 converts the input image data into the image data desired by an operator at a final stage. Until the resulting image data is stored as the finally converted output image data in the memory 73, the data is processed in this processing unit. Each of the processing units including the image processing unit 71 functions if necessary. However, in some cases, it does not function.

The multi-valued processing units 71a and 71b convert the binary data formed by the error diffusion processing unit 70c into 256-tone data again.

The synthesizing unit 71c selectively performs a logic operation for each pixel, that is, a logical OR, a logical AND or an exclusive OR. The data to be operated is pixel data stored in the memory 73 and bit data from a pattern generator (PG).

The density converting unit 71d selectively sets a relation of an output density to an input density with respect to the 256-tone digital signal based on a predetermined tone converting table.

The variable power processing unit 71e performs an interpolation with respect to the input data according to the indicated variable power for obtaining the pixel data (density value) for a power-varied pixel. The power variation is done for sub-scanning and then for main-scanning.

The image processing unit 71f performs various image processing with respect to the input pixel data and collect the information about a data train such as an extracted feature.

The error diffusion processing unit 71g performs the similar processing to the error diffusion processing unit 70c of the image data input unit 70.

The compression processing unit 71h serves to compress the binary data by performing a coding operation referred to as a run-length coding. Further, with respect to the compression of the image data, when the final data is completed, the compression is served in the final processing loop.

The image data output unit 72 includes a restoring unit 72a, a multi-valued processing unit 72b, an error diffusion processing unit 72c, and a laser output unit 72d.

The image data output unit 72 restores the compressed image data stored in the memory 73, converts the data into 256-tone data, performs an error diffusion of a quadruple data for obtaining a smoother halftone representation than the binary data, and transfers the resulting data to the laser output unit 72d. In other words, the restoring unit 72a serves to restore the image data compressed by the compression processing unit 71h.

The multi-valued processing unit 72b performs the similar operation to the multi-valued processing units 71a and 71b of the image processing unit 71. The error diffusion processing unit 72c performs the similar operation to the error diffusion processing unit 70c of the image data input unit 70.

The laser output unit 72d converts the digital pixel data into an on/off signal of a laser in response to a control signal sent from a sequence controller (not shown) so that the laser may be switched on and off.

The data to be processed in the image data input unit 70 and the image data output unit 72 is basically stored as binary data in the memory 73 for reducing the volume of the memory 73. It is also possible to process the quadruple data by considering the degrade of the image data.

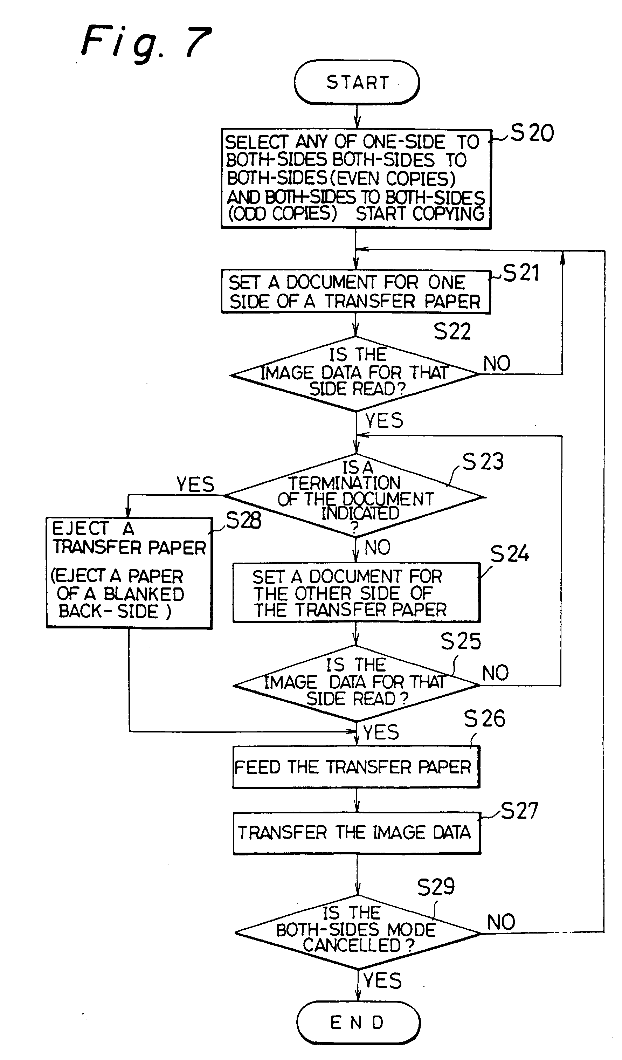

In the following section, a second embodiment of the image processing apparatus according to the present invention will be described by referring to a flow chart of the Fig. 7.

The image processing apparatus is adapted to optically read a document to be copied and form the read image data on both sides of one transfer paper. The image processing apparatus provides means for determining whether or not all the sequences to be preprocessed for transferring the image data on both sides of the transfer paper are terminated, means for starting feeding a transfer paper if it is determined that all the sequences are terminated. The image processing apparatus is characterized in that a printing of one side of the document is performed by an indication means disposed in an operation unit for indicating a termination of the documents, in case of reading out the documents one by one in a manual operation when the number of the documents is an odd.

Fig. 7 shows a both-sides copying operation performed in a digital copying machine according to the second embodiment of the present invention.

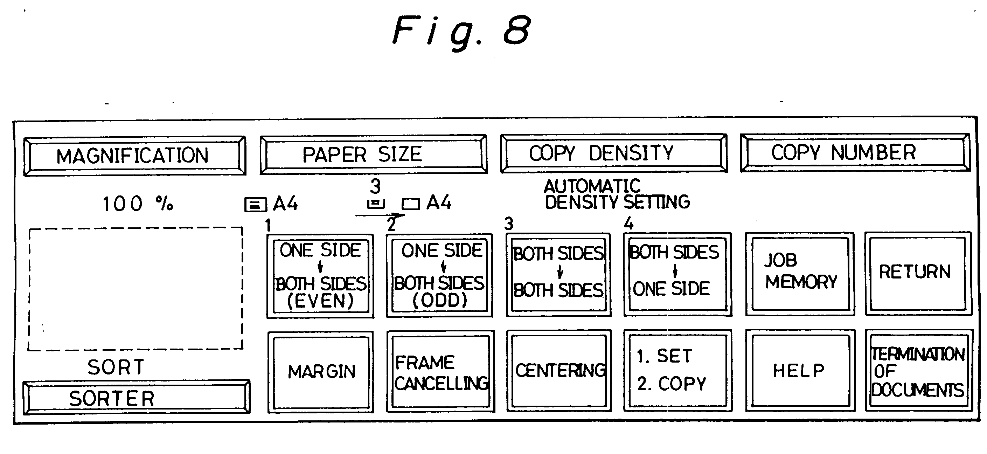

A "one-side to both-sides copying (even copies)" key, a "one-side to both-sides copying (odd copies)" key or a "both-sides to both-sides copying" key on the plus-function selecting screen shown in Fig. 8 appear on the display unit 11 of the operation panel 10 shown in Fig. 3. As shown in Fig. 8, a difference between the plus-function selecting screen of Fig. 4 and that of Fig. 8 is that "the other functions" key is replaced by "termination of documents" key.

The operation of performing both-sides copying is started by selecting the both-sides copying key and then by pressing a copy-starting button (step S20).

Next, the document containing the image data to be transferred on the side of a transfer paper by the ADF (Automatic Document Feeder) is placed on the document platform (step S21).

Then, the scanner unit scans in a manner to read the image data of the document and it is determined whether or not the image data is read by this scanning operation (step S22). If the image data is not properly read, for example, in case that the document is jammed in the ADF or the reading operation is stopped on the way, the operation returns to the step S21. In case that the jamming takes place, an operator has to remove the document from the ADF and then press the copy-starting button for starting the copying operation again.

If the affirmative result is given at the step 22, then it is determined whether or not a termination of the document is indicated (step S23).

In the step S23, when the termination of the document is indicated, then the transfer paper is ejected (with an ejection of a paper of a blanked back-side), then proceeds to the step S29 (will be described later).

On the other hand, when the termination of the document is not indicated at the step S23, then the document containing the image data to be transferred onto the other side of the transfer paper is placed on the document platform (step S24). In this case, the ADF may take two ways. One way is for the one-side to both-sides copying. In this way, the different succeeding document from that set at the step S11 is placed on the document platform. The other way is for the both-sides to both-sides copying. In this way, the document set at the step S11 is reversed and placed on the document platform.

Next, the scanner unit scans the document for reading the image data on the document, and it is determined whether or not the image data is read by this scanning operation (step S25). If the data is not properly read, for example, in case that the document is jammed in the ADF, the operation returns to the step S23.

If the affirmative result is given at the step S25, a transfer paper is fed from the cassette holding the transfer papers (step S26), and the image data on both sides is sequentially formed on the transfer paper (step S27).

Then it is determined whether or not the both-sides mode is canceled (step S29). When the both-sides mode is canceled, the process returns to the step S21. Otherwise, the process is terminated.

Therefore, in case of reading out the document one by one in a manual operation, the document is placed on the document platform and is read out one by one. In case that two pages of the documents are read out at this moment, a sequence of transferring to both sides of one sheet is completed, and feeding the sheet is started and a transfer is performed, respectively.

However, in case that the last document contains less than two pages, a sequence of transferring is not completed by reading out one page only. The sequence is completed by pushing a "Termination of Document" key disposed on the operation panel, and a transferring one side of one sheet is performed.

The operation just described referring to Fig. 7 can be achieved by the digital copying machine having the same hardware structure of the digital copying machine described in Fig. 5.

Many widely different embodiments of the present invention may be constructed without departing from the scope of the present invention. It should be understood that the present invention is not limited to the specific embodiments described in the specification, except as defined in the appended claims.

## Claims

1. An image processing apparatus for optically reading a document and forming read image data on both sides of one transfer paper, said image processing apparatus comprising
a document feeding means (36) for feeding a document to be read therefrom,
a document platform (35) for placing said document thereon, and
a scanning means (40) for reading image data of said document on said document platform (35), wherein said image processing apparatus further comprises
determining means (S12, S14; S22, S25) for determining whether or not said scanning means (40) has completed the reading of image data to be transferred on both sides of a transfer paper,
starting means (S15; S26) for starting a feeding of a transfer paper when said determining means (S12, S14; S22, S25) determines that said scanning means (40) has completed the reading, and wherein
said scanning means (40) includes an image memory (73) having a capacity corresponding to the both sides of said transfer paper.

2. An image processing apparatus according to claim 1, characterized in that said image processing apparatus further comprises an operation means (10, 11) which includes a plurality of function keys.

3. An image processing apparatus according to claim 2, characterized in that said operation means (10, 11) includes a both-sides copying key and a copy-starting key, and said determining means (S12, S14; S22, S25) is so arranged that a function of performing both-sides copying is started by selecting said both-sides copying key followed by pressing said copystarting key.

4. An image processing apparatus according to any one of claims 1 to 3, characterized in that said image processing apparatus is so arranged that when said image data is not properly read by said scanning means (40), a document containing image data to be transferred an a side of a transfer paper is placed on said document platform (35) by using said document feeding means (36) so as to repeat a scanning by said scanning means (40).

5. An image processing apparatus according to any one of claims 1 to 4, characterized in that said image processing apparatus is so arranged that when said determining means (S12, S14; S22, S25) determines that said image data to be transferred onto one side of said transfer paper is read properly, then a document to be transferred onto the other side of said transfer paper is placed on said document platform (35) by using said document feeding means (36).

6. An image processing apparatus according to any one of claims 1 to 5, characterized in that said document feeding means (36) is adapted to select any one of copying processes which include one-side to both-sides copying and both-sides to both-sides copying.

7. An image processing apparatus according to claim 6, characterized in that said document feeding means (36) is so arranged that when said one-side to both-sides copying is selected, a different succeeding document is placed on said document platform (35), and when said both-sides to both-sides copying is selected, said document is reversed and placed on said document platform (35).

8. An image processing apparatus according to claim 7, characterized in that said scanning means (40) scans said different document for reading image data on said different document when said one-side to both-sides copying is selected, and said scanning means scans said reversed document for reading image data on said reversed document when said both-sides to both-sides copying is selected.

9. An image processing apparatus according to claim 7 or 8, characterized in that said different succeeding document is placed on said document platform (35) by using said document feeding means (36) so as to repeat the scanning of image data to be transferred onto the other side of said transfer paper when said determining means (S12, S14; S22, S25) determines that said image data is not properly read by said scanning means (40).

10. An image processing apparatus according to claim 7 or 8, characterized in that said document is reversed and placed on said document platform (35) by using said document feeding means (36) so as to repeat the scanning of image data to be transferred onto the other side of said transfer paper when said determining means (S12, S14; S22, S25) determines that said image data is not properly read by said scanning means (40).

11. An image processing apparatus according to claim 1 to 10, characterized in that said image processing apparatus further includes an indication means for indicating a termination of said documents.

12. An image processing apparatus according to claim 11, characterized in that said indication means is so arranged that a printing of one side of a document is performed by said indication means in case of reading out said documents one by one in a manual operation when total number of said documents is an odd number.

13. An image processing apparatus according to claim 11 or 12, characterized in that said indication means is one of said plurality of function keys disposed in said operation means (10, 11).

## Patentansprüche

1. Bildverarbeitungsgerät zum optischen Lesen eines Dokuments und zum Erzeugen gelesener Bilddaten auf beiden Seiten eines Übertragungspapier-Blatts, mit:
- einer Dokumentenzuführeinrichtung (36) zum Zuführen eines Dokuments, von dem zu lesen ist;
- einer Vorlagenplatte (35) zum Positionieren des Dokuments auf derselben; und
- einer Abtasteinrichtung (40) zum Lesen von Bilddaten des Dokuments auf der Vorlagenplatte (35); ferner mit folgendem:
- einer Ermittlungseinrichtung (S12, S14; S22, S25) zum Ermitteln, ob die Abtasteinrichtung (40) das Lesen der Bilddaten abgeschlossen hat, die auf beide Seiten eines Übertragungspapier-Blatts zu übertragen sind;
- einer Starteinrichtung (S15; S26) zum Starten des Zuführens eines Übertragungspapier-Blatts, wenn die Ermittlungseinrichtung (S12, S14; S22, S25) ermittelt hat, dass die Abtasteinrichtung (40) den Lesevorgang abgeschlossen hat; und
- wobei die Abtasteinrichtung (40) einen Bildspeicher (43) mit einem Speichervermögen aufweist, das den beiden Seiten des Übertragungspapier-Blatts entspricht.

2. Bildverarbeitungsgerät nach Anspruch 1, **dadurch gekennzeichnet, dass** es ferner eine Bedienungseinrichtung (10, 11) aufweist, die eine Anzahl von Funktionstasten beinhaltet.

3. Bildverarbeitungsgerät nach Anspruch 2, **dadurch gekennzeichnet, dass** die Bedienungseinrichtung (10, 11) eine Taste für zweiseitiges Kopieren und eine Kopierstarttaste aufweist und die Ermittlungseinrichtung (S12, S14; S22, S25) derartig ausgebildet ist, dass durch Auswählen der Taste für zweiseitiges Kopieren, gefolgt von einem Betätigen der Kopierstarttaste die Funktion des zweiseitigen Kopierens ausgeführt wird.

4. Bildverarbeitungsgerät nach einem der Ansprüche 1 bis 3, **dadurch gekennzeichnet, dass** es so ausgebildet ist, dass dann, wenn die Bilddaten von der Abtasteinrichtung (40) nicht korrekt gelesen werden, ein Dokument, das auf eine Seite eines Übertragungspapier-Blatts zu übertragende Bilddaten enthält, unter Verwendung der Dokumentenzuführeinrichtung (36) auf der Vorlagenplatte (35) positioniert wird, um den Abtastvorgang durch die Abtasteinrichtung (40) zu wiederholen.

5. Bildverarbeitungsgerät nach einem der Ansprüche 1 bis 4, **dadurch gekennzeichnet, dass** es so ausgebildet ist, dass dann, wenn die Ermittlungseinrichtung (S12, S14; S22, S25) ermittelt, dass die auf eine Seite des Übertragungspapier-Blatts zu übertragenden Bilddaten nicht korrekt gelesen werden, ein Dokument, das auf die andere Seite des Übertragungspapier-Blatts zu übertragen ist, unter Verwendung der Dokumentenzuführeinrichtung (36) auf der Vorlagenplatte (35) positioniert wird.

6. Bildverarbeitungsgerät nach einem der Ansprüche 1 bis 5, **dadurch gekennzeichnet, dass** die Dokumentenzuführeinrichtung (36) so ausgebildet ist, dass sie einen von mehreren Kopierprozessen auswählt, zu denen Kopieren von einer Seite auf zwei Seiten sowie Kopieren von zwei Seiten auf zwei Seiten gehören.

7. Bildverarbeitungsgerät nach Anspruch 6, **dadurch gekennzeichnet, dass** die Dokumentenzuführeinrichtung (36) so ausgebildet ist, dass dann, wenn Kopieren von einer Seite auf zwei Seiten ausgewählt wird, ein anderes, folgendes Dokument auf die Vorlagenplatte (35) aufgelegt wird, während dann, wenn Kopieren von zwei Seiten auf zwei Seiten ausgewählt wird, das Dokument umgedreht und auf die Vorlagenplatte (35) aufgelegt wird.

8. Bildverarbeitungsgerät nach Anspruch **7, dadurch gekennzeichnet, dass** die Abtasteinrichtung (40) das andere Dokument zum Lesen von Bilddaten auf diesem anderen Dokument abtastet, wenn Kopieren von einer Seite auf zwei Seiten ausgewählt wird, während die Abtasteinrichtung das umgedrehte Dokument zum Lesen von Bilddaten auf dem umgedrehten Dokument abtastet, wenn Kopieren von zwei Seiten auf zwei Seiten ausgewählt ist.

9. Bildverarbeitungsgerät nach Anspruch 7 oder 8, **dadurch gekennzeichnet, dass** das andere, folgende Dokument unter Verwendung der Dokumentenzuführeinrichtung (36) auf die Vorlagenplatte (35) aufgelegt wird, um das Abtasten der auf die andere Seite des Übertragungspapier-Blatts zu übertragenden Bilddaten zu wiederholen, wenn die Ermittlungseinrichtung (S12, S14; S22, S25) ermittelt, dass die Bilddaten von der Abtasteinrichtung (40) nicht korrekt gelesen werden.

10. Bildverarbeitungsgerät nach Anspruch 7 oder 8, **dadurch gekennzeichnet, dass** das Dokument unter Verwendung der Dokumentenzuführeinrichtung (36) umgedreht und auf die Vorlagenplatte (35) aufgelegt wird, um das Abtasten der Bilddaten zu wiederholen, die auf die andere Seite des Übertragungspapier-Blatts zu übertragen sind, wenn die Ermittlungseinrichtung (S12, S14; S22, S25) ermittelt, dass die Bilddaten von der Abtasteinrichtung (40) nicht korrekt gelesen werden.

11. Bildverarbeitungsgerät nach einem der Ansprüche 1 bis 10, **dadurch gekennzeichnet**, **dass** es ferner eines Hinweiseinrichtung zum Hinweisen auf das Ende der Dokumente aufweist.

12. Bildverarbeitungsgerät nach Anspruch 11, **dadurch gekennzeichnet, dass** die Hinweiseinrichtung so ausgebildet ist, dass von ihr ein Druckvorgang für eine Seite eines Dokuments ausgeführt wird, wenn die Dokumente bei Handbetrieb einzeln gelesen werden, wenn die Gesamtanzahl der Dokumente eine ungerade Zahl ist.

13. Bildverarbeitungsgerät nach Anspruch 11 oder 1**2, dadurch gekennzeichnet, dass** dass die Hinweiseinrichtung eine der mehreren in der Bedienungseinrichtung (10, 11) angeordneten Funktionstasten ist.

## Revendications

1. Appareil de traitement d'image pour lire optiquement un document et former les données d'image lues sur les deux faces d'un papier de transfert , ledit appareil de traitement d'image comportant:
un moyen d'avance de document (36) pour faire avancer un document à lire,
un plateau porte-document (35) pour y placer ledit document, et
un moyen de balayage (40) pour lire les données d'image dudit document placé sur ledit plateau porte-document (35), dans lequel ledit appareil de traitement d'image comporte en outre
un moyen de détermination (S12, S14; S22, S25) pour déterminer si ledit moyen de balayage (40) a terminé ou non la lecture des données d'image à transférer sur les deux faces d'un papier de transfert,
un moyen de démarrage (S15; S26) pour faire démarrer l'avance d'un papier de transfert quand ledit moyen de détermination (S12, S14; S22, S25) détermine que ledit moyen de balayage (40) a terminé la lecture, et dans lequel
ledit moyen de balayage (40) comporte une mémoire d'images (73) dont la capacité correspond aux deux faces dudit papier de transfert.

2. Appareil de traitement d'image selon la revendication 1, caractérisé en ce que ledit appareil de traitement d'image comporte en outre un moyen de fonctionnement (10, 11) qui comprend une pluralité de touches de fonction.

3. Appareil de traitement d'image selon la revendication 2, caractérisé en ce que ledit moyen de fonctionnement (10, 11) comprend une touche de copie double face et une touche de démarrage de copie, et ledit moyen de détermination (S12, S14; S22, S25) est agencé de façon à ce qu'une fonction de réalisation de copie double face démarre quand on sélectionne ladite touche de copie double face avant d'appuyer sur ladite touche de démarrage de copie.

4. Appareil de traitement d'image selon l'une quelconque des revendications 1 à 3, caractérisé en ce que ledit appareil de traitement d'image est agencé de façon à ce que, lorsque lesdites données d'image ne sont pas correctement lues par ledit moyen de balayage (40), un document portant les données d'image à transférer sur une des faces d'un papier de transfert soit placé sur ledit plateau porte-document (35) en utilisant ledit moyen d'avance de document (36) de façon à répéter le balayage effectué par ledit moyen de balayage (40).

5. Appareil de traitement d'image selon l'une quelconque des revendications 1 à 4, caractérisé en ce que ledit appareil de traitement d'image est agencé de façon à ce que, lorsque ledit moyen de détermination (S12, S14; S22, S25) détermine que lesdites données d'image à transférer sur une des faces dudit papier de transfert sont lues correctement, un document à transférer sur l'autre face dudit papier de transfert soit alors placé sur ledit plateau porte-document (35) en utilisant ledit moyen d'avance de document (36).

6. Appareil de traitement d'image selon l'une quelconque des revendications 1 à 5, caractérisé en ce que ledit moyen d'avance de document (36) est conçu pour sélectionner n'importe lequel des processus de copie entre le mode de copie simple face / double face et le mode de copie double face / double face.

7. Appareil de traitement d'image selon la revendication 6, caractérisé en ce que ledit moyen d'avance de document (36) est agencé de façon à ce que, lorsque ledit mode de copie simple face / double face est sélectionné, un document suivant différent soit placé sur ledit plateau porte-document (35), et, lorsque ledit mode de copie double face / double face est sélectionné, ledit document soit retourné et placé sur ledit plateau porte-document (35).

8. Appareil de traitement d'image selon la revendication 7, caractérisé en ce que ledit moyen de balayage (40) balaie ledit document différent pour lire les données d'image sur ledit document différent quand on sélectionne ledit mode de copie simple face / double face, et ledit moyen de balayage balaie ledit document retourné pour lire les données d'image sur ledit document retourné quand on sélectionne ledit mode de copie double face / double face.

9. Appareil de traitement d'image selon la revendication 7 ou 8, caractérisé en ce que ledit document suivant différent est placé sur ledit plateau porte-document (35) en utilisant ledit moyen d'avance de document (36) de façon à répéter le balayage des données d'image à transférer sur l'autre face dudit papier de transfert quand ledit moyen de détermination (S12, S14; S22, S25) détermine que lesdites données d'image ne sont pas lues correctement par ledit moyen de balayage (40).

10. Appareil de traitement d'image selon la revendication 7 ou 8, caractérisé en ce que ledit document est retourné et placé sur ledit plateau porte-document (35) en utilisant ledit moyen d'avance de document (36) de façon à répéter le balayage des données d'image à transférer sur l'autre face dudit papier de transfert quand ledit moyen de détermination (S12, S14; S22, S25) détermine que lesdites données d'image ne sont pas lues correctement par ledit moyen de balayage (40).

11. Appareil de traitement d'image selon les revendications 1 à 10, caractérisé en ce que ledit appareil de traitement d'image comprend en outre un moyen d'indication pour indiquer la fin desdits documents.

12. Appareil de traitement d'image selon la revendication 11, caractérisé en ce que ledit moyen d'indication est agencé de façon à ce qu'une impression simple face d'un document soit effectuée par ledit moyen d'indication en cas de lecture des documents un par un en fonctionnement manuel quand le nombre total desdits documents est un nombre impair.

13. Appareil de traitement d'image selon la revendication 11 ou 12, caractérisé en ce que ledit moyen d'indication est une des touches de ladite pluralité de touches de fonction placées sur ledit moyen de fonctionnement (10, 11).
